# EUROPEAN PATENT SPECIFICATION

(11) **EP 3 004 969 B1**
(45) Date of publication and mention of the grant of the patent: **17.11.2021**
(21) Application number: 14727806.3
(22) Date of filing: 29.05.2014
(51) Int. Cl.: G02C 1/08, G02C 5/12

(54) **EYEGLASSES FRAME AND A METHOD FOR MOUNTING LENSES IN AN EYEGLASSES FRAME**
BRILLENFASSUNG UND VERFAHREN ZUR MONTAGE VON BRILLENGLÄSERN IN EINER BRILLENFASSUNG
MONTURE DE LUNETTES ET PROCÉDÉ POUR MONTER DES VERRES DANS UNE MONTURE DE LUNETTES

(30) Priority: 31.05.2013 IT BO20130276
(43) Date of publication of application: 13.04.2016
(73) Proprietor: Luxottica S.r.l., 32021 Agordo (IT)
(72) Inventor: DAL PONT, Moreno, I-32036 Sedico (IT)
(74) Representative: Modiano, Micaela Nadia
(86) International application number: PCT/EP2014/061216
(87) International publication number: WO 2014/191540

(56) References cited:
- WO-A1-2010/121778
- WO-A1-2011/007421
- DE-A1-102004 058 631
- DE-U1-202009 016 606
- DE-U1-202010 013 199
- None

## Description

The present invention relates to an eyeglasses frame and a method for mounting lenses in an eyeglasses frame.

The invention relates to the eyewear sector. Eyeglasses are constituted by lenses which are coupled to a frame, which comprises a front and two temples which are hinged to the front.

Usually, the front is provided with a pair of eyewires which are configured to hold the lenses.

In particular, the invention relates to eyeglasses in which eyewires are interrupted, defining two corresponding free ends, which can be moved apart in order to allow the introduction of the lens inside the eyewire.

In this type of frame, it is necessary to have locking elements in order to close the eyewires, i.e. in order to stably connect the ends of each eyewire to each other, after the lens has been inserted in the eyewire.

In this area, several technical solutions are known, of which the following patent documents provide some examples: WO2011/007421A1, DE202010013199U1, DE102004058631A1, WO2011/151688A1, FR2603711A1 and DE3741358A1.

In these prior art documents, the locking element defines two locators, which are configured to receive coupling portions of the respective ends of the corresponding eyewire.

Furthermore, the coupling element can be elastically elongated, in order to allow the coupling of the respective ends of the eyewire and allow the eyewire to retain the lens stably.

Therefore, such elasticity is needed in order to allow the insertion and extraction of the lenses into/from the eyewires.

Furthermore, some of such solutions involve contrivances that are aimed at reducing the risk of an accidental uncoupling of the locking element; for example, the locators of the locking element are functionally inserted into corresponding openings defined by the ends and are inclined, so as to diverge in opposite directions to the direction of approach of the ends.

However, such conventional solutions, for frames with interrupted eyewires, suffer some drawbacks.

A first drawback is constituted by the fact that such frames are inconvenient to assemble and are relatively weak, in that the locking element has to be subjected to a considerable mechanical force, during coupling and uncoupling of the ends of the eyewire.

Furthermore, such frames are not particularly secure, in that the elasticity of the coupling element, with ageing and with use, tends to reduce and as a consequence the frame may undergo accidental openings of the eyewire.

The aim of the present invention is to provide a frame and a method for mounting lenses in an eyeglasses frame which overcome the drawbacks of the above mentioned known art.

In particular, an object of the present invention is to provide a frame and a method for mounting lenses in an eyeglasses frame which are particularly simple and strong.

A further object of the present invention is to provide a frame and a method for mounting lenses in an eyeglasses frame which are particularly secure and reliable.

This aim and these objects are fully achieved by the frame and by the method of the present invention, according to the appended claims.

In particular, the invention relates to an eyeglasses frame as defined in present claim 1. The frame comprises:
- a front having a first and a second eyewire that are adapted to encompass respective lenses, each one of said eyewires being interrupted, thus defining two corresponding ends that can be moved apart for introducing the lens into the eyewire;
- a first and a second temple, which are hinged to the front;
- a first and a second locking element which can be coupled to the respective eyewires in order to couple the corresponding ends.

It should be noted that, preferably, the locking element is free from screws and welds; furthermore, preferably the coupling element is rigid (i.e. it is made of a rigid material); this makes it particularly strong and aesthetically pleasing.

Furthermore, it should be noted that the temples may be substituted by an elastic band (for example if the eyeglasses are of the mask-style goggle type), without this involving any modification to the solution proposed by the present invention regarding the system for closing the eyewire.

Therefore, it should be noted that the expression "a first and a second temple which are hinged to the front" must be understood to be very broad and non-limiting.

Similarly, it should be noted that the front of the frame could comprise a single eyewire, for example for a single lens for mask-style goggle eyeglasses; such circumstance also does not modify the solution proposed by the present invention regarding the system for closing the eyewire.

Therefore, the present invention is intended to also cover a frame having a single eyewire and, as a consequence, a single locking element.

Each one of the locking elements defines two locators, which are configured to accommodate coupling portions of the respective ends of the corresponding eyewire.

Furthermore, preferably, the frame comprises a first and a second nosepiece, which are functionally connected to the respective eyewires and are provided with pads for resting on the nose of the person wearing the eyeglasses, in which each one of the coupling elements is fixed to a respective nosepiece.

According to the invention, for each eyewire, at least one of the ends has an elastic end portion that projects toward the other end of the eyewire; such elastic end portion is configured to deform elastically between a rest position and a flexed position.

In this manner, flexing the elastic end portion makes it possible to bring together the ends of the eyewire, by way of exerting a pressure of one end against the other, against the (elastic) resistance generated by the elastic end portion.

This makes the coupling and uncoupling of the locking element particularly easy and makes the frame particularly strong.

Preferably, both of the ends of the eyewire are provided with elastic end portions, which are configured to fit together and press against each other, flexing, when the ends are brought together.

Preferably, the coupling elements are integral with the nosepieces of the frame; preferably, the nosepieces and the coupling elements are made by pressing from sheet metal (preferably in one piece); preferably the eyewires are also made by pressing from sheet metal.

Each end of the eyewire comprises a tooth. Such tooth projects from the eyewire transversely, with respect to a longitudinal direction of mutual approach of the two ends of the eyewire (the end of the eyewire being elongated in such longitudinal direction), on the opposite side from that intended to be in contact with the lens.

Furthermore, the tooth is configured to be inserted in a slot of the locking element.

Furthermore, each end of the eyewire also comprises a protrusion, which also projects from the eyewire transversely, and is distanced from the tooth in the opposite direction from the direction of approach.

The protrusions provide surfaces for resting a pliers or another tool adapted to press the ends of the eyewire against each other.

This enables the person to bring together and move apart the ends of the eyewire particularly easily using one hand only, by defeating or favoring, respectively, the elastic force of the elastic end portions of the ends of the eyewire.

Bringing together the ends of the eyewire and thus also the teeth makes it possible to disengage the slots (or the slot) of the locking element; such operation makes it possible to couple and uncouple the locking element to/from the ends of the eyewire.

However, when no outside force is applied to the ends of the eyewire, the elastic force exerted by the elastic end portions (which are compressed, i.e. flexed and thus loaded, when the locking element is coupled to the ends of the eyewire) acts to push the teeth away from each other, pressing them against the respective locators of the locking element.

Preferably, for each end of the eyewire, the tooth and the protrusion are spaced apart only slightly more than the longitudinal thickness of the corresponding portions of the locking element that define the locators; therefore a notch is defined between the tooth and the protrusion.

Therefore, preferably, the (free) ends of the eyewire define respective notches that are adapted to accommodate corresponding portions of the locking element that define these locators.

When the teeth of the ends of the eyewire are inserted in the slot of the locking element, surfaces of the teeth facing away from each other are pressed against corresponding surfaces of the locking element which delimit, at opposite ends, the slot; such surfaces constitute the locators of the locking element and the teeth constitute the coupling portions of the ends of the eyewire; such surfaces are preferably defined by undercuts that are formed by the teeth.

Therefore, preferably, the teeth have undercuts, in order to reduce the risk of an accidental uncoupling thereof from the slot of the locking element.

Therefore, when the locking element is coupled to the ends of the eyewire, end portions of the locking element are inserted into these notches (which are interposed between the teeth and the protrusions of the ends of the eyewire).

The end portions of the locking element are fork-shaped; therefore, the coupling element has two forks facing in opposite directions, at its ends. Each fork is formed preferably by pairs of walls that are adapted to receive the protrusions between them.

Therefore, when the locking element is coupled to the ends of the eyewire, the protrusions of the ends of the eyewire are inserted at least partly into the forks.

This makes the frame particularly strong, by preventing an accidental rotation of the locking element with respect to the eyewire.

It should be noted therefore that the contact surfaces between the protrusions and the walls of the forks are perpendicular to the contact surfaces between the locators of the locking elements and the coupling portions (the teeth) of the respective ends of the corresponding eyewire.

Therefore, when the ends of the eyewire are coupled to the locking element, a pressure is established between mutually adjacent head areas of the ends of the eyewire, owing to an elasticity of the coupling between those ends.

Such elasticity is provided by the fact that the ends of the eyewire terminate with the elastic end portions, which, when the ends of the eyewire are held together by the locking element, are pressed against each other; therefore, such elasticity function is not entrusted to the locking element, but of the ends of the eyewire.

This makes it possible to make the locking element particularly strong (preferably integral with the nosepiece).

Preferably, such elastic end portions are shaped like tangs which are resilient, and extend longitudinally in the same direction (they are substantially adjacent) and transversely (preferably in a direction that is opposite to the direction in which the teeth of the ends of the eyewire protrude).

Therefore, the invention provides a method for mounting lenses in an eyeglasses frame.

Such frame is provided with a front having a first and a second eyewire that are adapted to encompass the respective lenses; each one of the eyewires is interrupted, thus defining two corresponding ends that can be moved apart for introducing the lens into the eyewire.

Furthermore, such frame is provided with a first and a second locking element which can be coupled to the respective eyewires in order to couple the corresponding ends, each one of these locking elements defining two locators, which are configured to receive coupling portions of the respective ends of the corresponding eyewire.

A method for mounting lenses in the eyeglasses frame involves a step of distancing the ends of the eyewire and inserting the lens in the eyewire, for each eyewire i.e. for each lens.

Such a method also comprises the following steps:
- bringing together the ends of the eyewire toward each other and deforming at least one elastic end portion projecting from at least one end toward the other end of the eyewire;
- coupling the locking element to the ends, positioning the locators of the coupling element outside the corresponding coupling portions of the ends and outside the at least one elastic portion, with respect to the longitudinal direction of mutual approach of the two ends.

The step of bringing together is not only used for coupling the locking element to the ends, but also for uncoupling it.

Preferably, the step of bringing together is carried out while pressing externally on the protrusions, for example with a pliers, exerting a force directed longitudinally.

It should also be noted that the frame according to the invention makes it possible to insert and remove the lenses in a particularly simple and quick manner.

This and other characteristics will become better apparent from the following description of a preferred embodiment, which is illustrated merely for the purposes of non-limiting example in the accompanying drawings, in which:

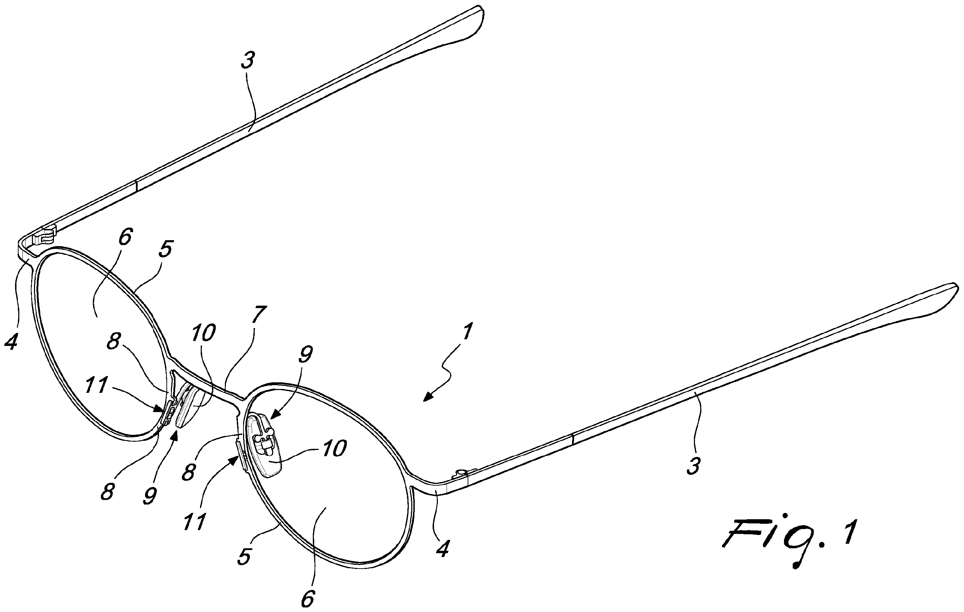

Figure 1 is a view of a frame according to the invention, with the eyewires closed;

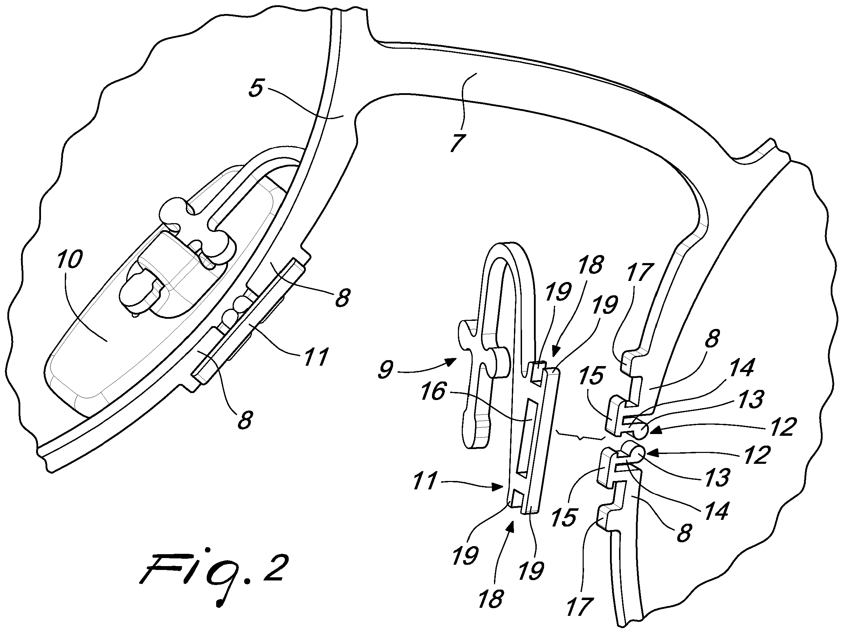

Figure 2 is a view of a detail of the frame in Figure 1, with the ends of the eyewire moved apart and the locking element uncoupled;

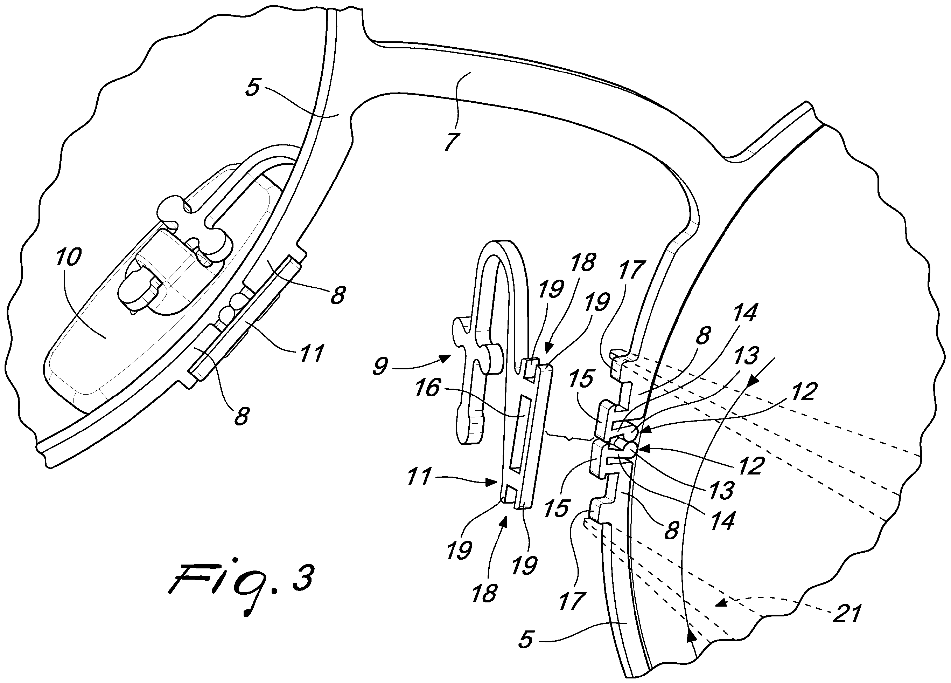

Figure 3 shows the detail of Figure 2, with the ends of the eyewire brought together using a pliers and the locking element uncoupled;

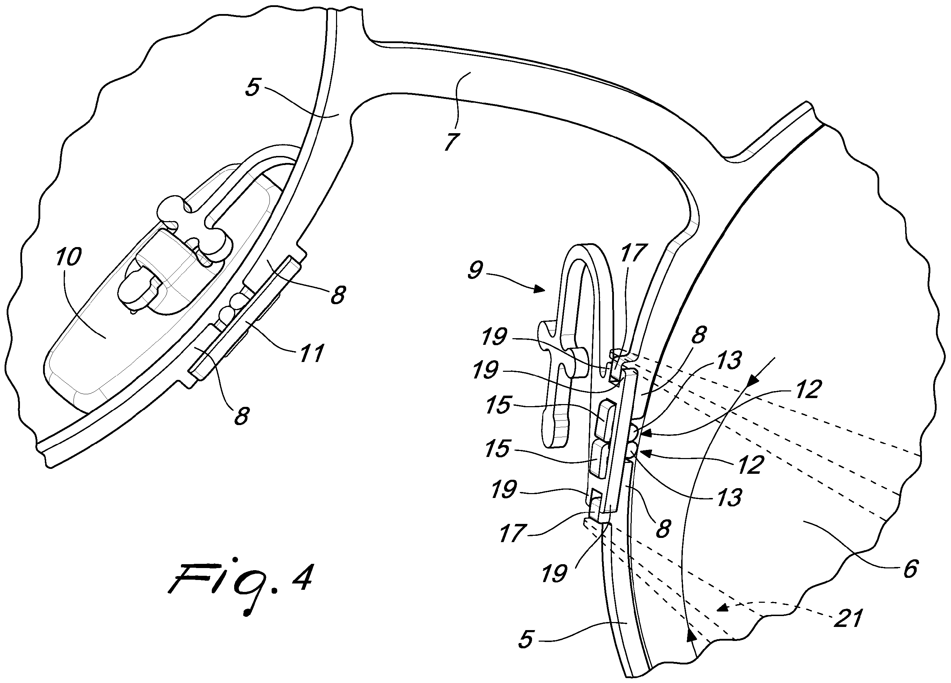

Figure 4 shows the detail of Figure 2, with the ends of the eyewire brought together using a pliers and the locking element coupled;

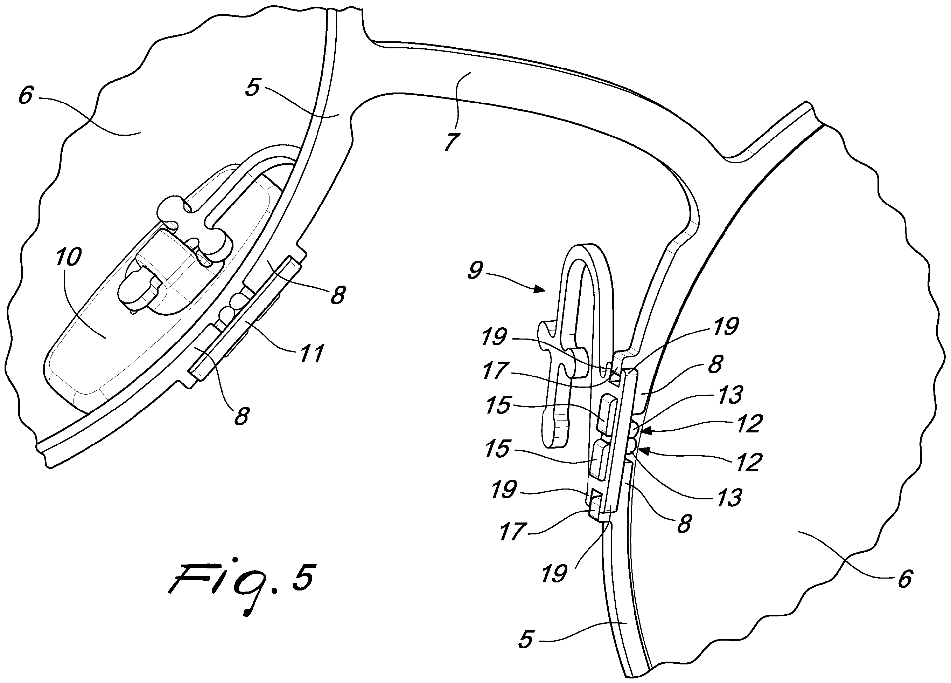

Figure 5 shows the detail in Figure 2, with the locking element coupled to the ends of the eyewire.

In the figures, the reference numeral 1 generally designates an eyeglasses frame according to the invention.

The frame 1 comprises a front 2 and two temples 3 which are hinged to the front 2.

The front 2, at the outer side portions, has two lugs 4 for connection to the temples 3.

Furthermore, the front 2 has a first and a second eyewire 5 which are adapted to encompass respective lenses 6. The eyewires are connected by a bridge 7.

The eyewires 5 are interrupted, in order to allow insertion and extraction of the lens 6 into/from the eyewire 5.

Therefore, each eyewire 5 defines, at the discontinuity, two corresponding ends 8 which can be moved apart in order to introduce the lens 6 into the eyewire 5.

Preferably, the eyewires 5 are interrupted in a distal region from the lugs 4, proximate to the bridge 7.

Furthermore, the frame 1 comprises, preferably, a first and a second nosepiece 9. The nosepieces 9 have respective pads 10 for resting on the nose of the person wearing the eyeglasses. Functionally, the nosepieces 9 are connected to the respective eyewires 5.

The frame 1 also comprises a first and a second locking element 11; such locking elements 11 can be detachably coupled to the respective eyewires 5 in order to couple (and decouple) the corresponding ends 8.

Therefore, each locking element 11 cooperates with the ends 8 in order to constitute a system for closing the eyewire 5.

According to the invention, for each eyewire 5, at least one of the ends 8 has an elastic end portion 12 projecting toward the other end in order to come into contact with (i.e. come into abutment against) it when the ends 8 are brought together.

Such elastic end portion 12 is configured to elastically deform with a push to bring the ends 8 toward each other. In particular, the elastic end portion 12 is elastically deformable between a rest position and a flexed position; in the flexed position, the elastic end portion 12 allows the ends to be brought together, reducing the space occupation of the end 8 in a longitudinal direction of mutual approach to the other end.

Each one of the locking elements 11 defines two locators, which are configured to accommodate coupling portions of the respective ends 8 of the corresponding eyewire, when the ends 8 are brought together and the at least one elastic end portion 12 is in the deformed configuration.

Preferably, for each eyewire 5, each one of the two ends 8 has an elastic end portion 12.

Preferably, each elastic end portion 12 projects toward the elastic end portion 12 of the other end (alternatively, the elastic end portions 12 could protrude toward respective non-elastic areas of the opposite ends 8).

The elastic end portions 12 are configured to deform elastically between a rest position and a flexed position, thus making it possible for the ends to be brought together by pressing the elastic end portions against each other (defeating a resisting force generated by the elastic end portions 12 themselves).

Preferably, the elastic end portion 12 comprises a head 13 which projects longitudinally from the end 8 of the eyewire 5 in order to protrude toward the corresponding end 8 of the same eyewire 5.

Such head 13 is connected to the rest of the end 8 by way of an arm 14. Such arm 14, preferably, has at least one portion arranged transversely to the longitudinal direction of mutual approach of the ends 8; the arm 14 has a first end connected to the rest of the end 8 of the eyewire 5, and a second end connected to the head 13.

For each eyewire 5, the ends 8 have respective teeth 15; such teeth 15 project from the eyewire 5 transversely, with respect to the longitudinal direction of mutual approach of the ends 8.

The teeth 15 define these coupling portions.

The locking element 11 defines a slot 16, or a plurality of slots.

The slots 16 are configured to accommodate the teeth 15 of the ends 8. The slots 16 have abutment surfaces, onto which the teeth 15 are fitted when the locking element 11 is coupled to the ends 8.

Therefore, the abutment surfaces of the slot 16 constitute the locators of the locking element 11.

Preferably, the teeth 15 have undercuts (which define the coupling portions of the ends 8 of the eyewire 5) into which fit the locators of the coupling element 11.

The ends 8 also have respective protrusions 17 that project transversely with respect to the longitudinal direction of mutual approach of the ends 8; each protrusion 17 is distanced from the respective tooth 15 away from a head portion of the end 8.

Furthermore, each locking element 11 defines a fork 18 at its ends; such fork comprises a pair of walls 19 that are spaced apart along a direction perpendicular to the longitudinal direction of mutual approach of the ends 8 of the eyewire 5 and perpendicular to the transverse direction in which the teeth 15 protrude, when the locking element 11 is coupled to the ends 8 of the eyewire 5.

The fork 18 is configured to encompass at least one part of the corresponding protrusions 17 of the ends 8 of the eyewires 5.

It should be noted that, functionally (when the locking element 11 is coupled to the ends 8 of the eyewire 5), the locators of the coupling element 11 are functionally interposed between the teeth 15 and the protrusions 17 of the respective ends 8 of the eyewire 5.

Preferably, each one of the coupling elements 11 is fixed to a respective nosepiece 9. Preferably, the nosepiece 9 is joined to the coupling element 11 along a side wall (arranged in the longitudinal direction along which the coupling element 11 is extended) of the coupling element 11 itself. In particular, the nosepiece 9 comprises an arm 20 that has one end connected to the pad 10 and the other (enlarged) end joined to the coupling element 11.

It should be noted that the locators of the coupling element 11 are defined on opposite ends of the coupling element 11, the connection with the arm 20 of the nosepiece 9 being lateral with respect to the locators.

Preferably, the nosepieces 9 are made in one piece together with the respective coupling elements 11.

A method for mounting and unmounting lenses in and from an eyeglasses frame 1 (of the type with an interrupted eyewire 5) comprises a step of moving the ends 8 of the eyewire 5 apart, in order to insert the lens.

Furthermore, according to the invention, the method comprises a step of bringing together the ends 8 and consequent deformation of the at least one elastic end portion 12 (until the teeth 15 are at a distance such that they can be inserted into the slot 16 of the coupling element 11).

Subsequently, we proceed with a step of coupling the locking element 11 to the ends 8, positioning the locators of the coupling element 11 externally with respect to the corresponding coupling portions of the ends 8 of the eyewire and externally with respect to the at least one elastic end portion 12, with respect to a longitudinal direction of mutual approach of the two ends; in particular, the slot 16 of the locking element 11 is fitted over the teeth 15 of the ends, so that the teeth 15 are inserted in the slot 16.

Therefore, preferably, in the step of bringing together (and also, when the eyewire 5 is closed and the locking element 11 is coupled to the ends 8 of the eyewire 5), the elastic end portions 12 that project in a cantilever fashion from the respective ends 8 of the eyewire 5 press against each other, and are in the deformed configuration, exerting a thrust on the ends 8 to move them apart and which indeed would move them apart, if the teeth 15 of the ends were not fitted in the locators of the locking element 11.

It should be noted that, advantageously, the step of bringing together, for each eyewire 5, can be carried out by way of a pliers 21 (only partially illustrated in the figures), exerting a force (directed along the longitudinal direction) on the protrusions 17 that project in a cantilever fashion from the ends 8 of the eyewire 5, in order to push the protrusions 17 toward each other.

Reference is made to the disclosures in Italian Patent Application No. BO2013A000276 from which this application claims priority.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An eyeglasses frame (1) that comprises:
- a front (2) having at least one eyewire (5) that is adapted to encompass a respective lens and is interrupted, thus defining two corresponding ends (8) that can be moved apart for introducing the lens into the eyewire (5);
- a first and a second temple (3) which are hinged to the front (2);
- at least one locking element (11) that can be coupled to the eyewire (5) in order to couple the corresponding ends (8) and which defines two locators, which are configured to accommodate coupling portions of the respective ends (8) of the eyewire (5),
at least one of the ends (8) of the eyewire (5) having an elastic end portion (12), projecting toward the other end (8) and configured to deform elastically between a rest position and a flexed position, thus making it possible for said ends (8) to be brought together by pressing the ends (8) against each other and defeating a resisting force generated by said elastic end portion (12), wherein the ends (8) of the eyewire (5) have respective teeth (15), projecting from the eyewire (5) transversely, with respect to the longitudinal direction of mutual approach of the ends (8), which define said coupling portions and are configured to be inserted into a slot (16) defined by the locking element (11), in order to fit into an abutment surface of the slot, said abutment surface constituting said locator, **characterized in that** the ends (8) of the eyewire (5) have respective protrusions (17) that project transversely with respect to a longitudinal direction of mutual approach of said ends (8), and are distanced from the respective teeth (15) away from head portions of said ends (8), and **in that** said locking element (11) defines at its ends a fork (18) comprising pairs of walls (19) that are spaced apart in order to encompass at least one part of the corresponding protrusions (17) of the ends (8) of the eyewire (5), thereby said locators of the coupling element (11) are functionally interposed between the teeth (15) and the protrusions (17) of the respective ends (8) of the eyewire (5).

2. The frame according to claim 1, wherein each end (8) of the eyewire (5) has an elastic end portion (12) projecting toward the other end (8), said elastic end portions (12) being configured to deform elastically between a rest position and a flexed position, thus making it possible for said ends (8) to be brought together by pressing each elastic end portion (12) against the opposite end (8), defeating a resisting force generated by said elastic end portions (12).

3. The frame according to any one of the preceding claims, wherein said elastic end portion (12) comprises:
- a head (13) which projects longitudinally from the end (8) of the eyewire (5) in order to protrude toward the corresponding end (8);
- an arm (14) having at least one portion arranged transversely to the longitudinal direction of mutual approach of the ends (8) and having a first end connected to the rest of the end (8) of the eyewire (5) and a second end connected to said head (13).

4. The frame according to any one of the preceding claims, comprising: a first and a second eyewire (5), a corresponding first and a corresponding second coupling element (11) and a first and a second nosepiece (9) provided with pads (10) for resting on the nose of the person wearing the eyeglasses, wherein each one of the locking elements (11) is fixed to a respective nosepiece (9).

5. The frame according to claim 4, wherein the nosepieces (9) are made in one piece together with the respective locking elements (11) and wherein each nosepiece (9) comprises an arm (20) having a first end connected to the pad (10) and a second end joined to a lateral region of the respective coupling element (11), the locators of the coupling element (11) being defined by opposite ends of said coupling element.

## Patentansprüche

1. Ein Brillengestell (1), das Folgendes umfasst:
- eine Vorderseite (2) mit mindestens einem Augenrand (5), der ausgebildet ist, um eine entsprechende Linse zu umgeben, und der unterbrochen ist und so zwei entsprechende Enden (8) bestimmt, die zum Einführen der Linse in den Augenrand (5) auseinander bewegt werden können;
- einen ersten und einen zweiten Bügel (3), die gelenkig mit der Vorderseite (2) verbunden sind;
- mindestens ein Blockierelement (11), das mit dem Augenrand (5) zum Koppeln der entsprechenden Enden (8) gekoppelt werden kann und das zwei Positionierhilfen bestimmt, die ausgebildet sind, um Kopplungsabschnitte der jeweiligen Enden (8) des Augenrands (5) aufzunehmen,
wobei mindestens eines der Enden (8) des Augenrands (5) einen elastischen Endabschnitt (12) hat, der zum anderen Ende (8) vorsteht und ausgebildet ist, um sich elastisch zwischen einer Ruheposition und einer gebogenen Position zu verformen, wodurch es möglich wird, die Enden (8) zusammenzubringen durch Gegeneinanderdrücken der Enden (8) und Überwindung einer Widerstandskraft, die von dem elastischen Endabschnitt (12) erzeugt wird; wobei die Enden (8) des Augenrands (5) entsprechende Zähne (15) haben, die transversal, bezogen auf die Längsrichtung gegenseitiger Annäherung der Enden (8), vorstehen und die die Kopplungsabschnitte bestimmen und ausgebildet sind, um in einen Schlitz (16) eingeführt zu werden, welcher von dem Blockierelement (11) bestimmt wird, um in eine Widerlageroberfläche des Schlitzes zu passen, wobei die Widerlageroberfläche die Positionierhilfe bildet; **dadurch gekennzeichnet, dass** die Enden (8) des Augenrands (5) dazugehörige Vorsprünge (17) haben, welche transversal mit Bezug auf eine Längsrichtung gegenseitiger Annäherung der Enden (8) vorstehen und von den jeweiligen Zähnen (15) fort von Kopfabschnitten der Enden (8) beabstandet sind; und dadurch, dass das Blockierelement (11) an seinen Enden eine Gabelung (18) bestimmt, die Paare von Wänden (19) umfasst, die beabstandet sind, um mindestens einen Teil der entsprechenden Vorsprünge (17) der Enden (8) des Augenrands (5) zu umgeben; dadurch sind die Positionierhilfen des Kopplungselements (11) funktional zwischen den Zähnen (15) und den Vorsprüngen (17) der jeweiligen Enden (8) des Augenrands (5) angeordnet.

2. Das Gestell gemäß Anspruch 1, wobei jedes Ende (8) des Augenrands (5) einen elastischen Endabschnitt (12) hat, der zum anderen Ende (8) hin vorsteht, wobei die elastischen Endabschnitte (12) ausgebildet sind, um sich elastisch zwischen einer Ruheposition und einer gebogenen Position zu verformen, wodurch es möglich wird, die Enden (8) zusammenzubringen durch Drücken jedes elastischen Endabschnitts (12) gegen das gegenüberliegende Ende (8) und Überwindung einer Widerstandskraft, die von den elastischen Endabschnitten (12) erzeugt wird.

3. Das Gestell gemäß einem beliebigen der obigen Ansprüche, wobei der elastische Endabschnitt (12) Folgendes umfasst:
- einen Kopf (13), der in Längsrichtung vom Ende (8) des Augenrands (5) vorsteht, um zum entsprechenden Ende (8) hin zu ragen;
- einen Arm (14) mit mindestens einem Abschnitt, der quer zur Längsrichtung gegenseitiger Annäherung der Enden (8) angeordnet ist und dessen eines Ende mit dem Rest des Endes (8) des Augenrands (5) verbunden und dessen zweites Ende mit dem Kopf (13) verbunden ist.

4. Das Gestell gemäß einem beliebigen der obigen Ansprüche, das Folgendes umfasst: einen ersten und einen zweiten Augenrand (5), ein entsprechendes erstes und ein entsprechendes zweites Kopplungselement (11) und ein erstes und ein zweites Nasenstück (9), ausgestattet mit Polstern (10) zum Aufliegen auf der Nase der Person, die die Brille trägt, wobei jedes der Blockierelemente (11) an einem dazugehörigen Nasenstück (9) befestigt ist.

5. Das Gestell gemäß Anspruch 4, wobei die Nasenstücke (9) einteilig mit den dazugehörigen Blockierelementen (11) hergestellt sind und wobei jedes Nasenstück (9) einen Arm (20) mit einem ersten Ende umfasst, das mit dem Polster (10) verbunden ist, und mit einem zweiten Ende, welches mit einem seitlichen Bereich des jeweiligen Kopplungselements (11) verbunden ist, wobei die Positionierhilfen des Kopplungselements (11) durch gegenüberliegende Enden des Kopplungselements bestimmt sind.

## Revendications

1. Monture de lunettes (1) qui comporte :
- une face avant (2) ayant au moins un cercle (5) qui est adapté pour englober une lentille respective et est interrompu, en définissant ainsi deux extrémités (8) correspondantes qui peuvent être écartées pour introduire la lentille dans le cercle (5),
- une première et une seconde branche (3) qui sont articulées sur la face avant (2),
- au moins un élément de blocage (11) qui peut être couplé au cercle (5) afin de coupler les extrémités (8) correspondantes et qui définit deux positionneurs, qui sont configurés pour recevoir des portions de couplage des extrémités (8) respectives du cercle (5),
au moins une des extrémités (8) du cercle (5) ayant une portion d'extrémité élastique (12), faisant saillie vers l'autre extrémité (8) et configurée pour se déformer élastiquement entre une position de repos et une position fléchie, en permettant ainsi de réunir lesdites extrémités (8) en pressant les extrémités (8) l'une contre l'autre et en surmontant une force de résistance générée par ladite portion d'extrémité élastique (12), dans laquelle les extrémités (8) du cercle (5) ont des dents (15) respectives, faisant saillie à partir du cercle (5) de manière transversale, par rapport à la direction longitudinale d'approche mutuelle des extrémités (8), qui définissent lesdites portions de couplage et sont configurées pour être insérées dans une fente (16) définie par l'élément de blocage (11), afin de s'agencer dans une surface de butée de la fente, ladite surface de butée constituant ledit positionneur, **caractérisée en ce que** les extrémités (8) du cercle (5) ont des saillies (17) respectives qui font saillie transversalement par rapport à une direction longitudinale d'approche mutuelle desdites extrémités (8), et sont à distance des dents (15) respectives en s'éloignant des portions de tête desdites extrémités (8), et **en ce que** ledit élément de blocage (11) définit à ses extrémités une fourchette (18) comportant des paires de parois (19) qui sont espacées l'une de l'autre afin d'englober au moins une partie des saillies (17) correspondantes des extrémités (8) du cercle (5), lesdits positionneurs de l'élément de couplage (11) étant ainsi fonctionnellement intercalés entre les dents (15) et les saillies (17) des extrémités (8) respectives du cercle (5).

2. Monture selon la revendication 1, dans laquelle chaque extrémité (8) du cercle (5) a une portion d'extrémité élastique (12) faisant saillie vers l'autre extrémité (8), lesdits portions d'extrémité élastiques (12) étant configurées pour se déformer élastiquement entre une position de repos et une position fléchie, en permettant ainsi de réunir lesdites extrémités (8) en pressant chaque portion d'extrémité élastique (12) contre l'extrémité (8) opposée, en surmontant une force de résistance générée par lesdites portions d'extrémité élastiques (12).

3. Monture selon l'une quelconque des revendications précédentes, dans laquelle ladite portion d'extrémité élastique (12) comporte :
- une tête (13) qui fait saillie longitudinalement à partir de l'extrémité (8) du cercle (5) afin de faire saillie vers l'extrémité (8) correspondante,
- un bras (14) ayant au moins une portion agencée transversalement à la direction longitudinale d'approche mutuelle des extrémités (8) et ayant une première extrémité reliée au reste de l'extrémité (8) du cercle (5) et une seconde extrémité reliée à ladite tête (13) .

4. Monture selon l'une quelconque des revendications précédentes, comportant : un premier cercle et un second cercle (5), un premier élément de couplage correspondant et un second élément de couplage correspondant (11) et une première arcade nasale et une seconde arcade nasale (9) pourvues de plaquettes (10) pour reposer sur le nez de la personne portant les lunettes, dans laquelle chacun des éléments de blocage (11) est fixé à une arcade nasale (9) respective.

5. Monture selon la revendication 4, dans laquelle les arcades nasales (9) sont fabriquées en une seule pièce en association avec les éléments de blocage (11) respectifs et dans laquelle chaque arcade nasale (9) comporte un bras (20) ayant une première extrémité reliée à la plaquette (10) et une seconde extrémité reliée à une zone latérale de l'élément de couplage (11) respectif, les positionneurs de l'élément de couplage (11) étant définis par des extrémités opposées dudit élément de couplage.
